# EUROPEAN PATENT SPECIFICATION

(11) **EP 2 008 839 B1**
(45) Date of publication and mention of the grant of the patent: **12.01.2011**
(21) Application number: 08010484.7
(22) Date of filing: 09.06.2008
(51) Int. Cl.: B60H 1/00

(54) **Air-conditioning control unit**
Steuerungseinheit für eine Klimaanlage
Unité de contrôle de climatisation d'air

(30) Priority: 28.06.2007 JP 2007170858
(43) Date of publication of application: 31.12.2008
(73) Proprietor: ALPS ELECTRIC CO., LTD., Tokyo 145-8501 (JP)
(72) Inventor: Matsuoka, Daisuke, Tokyo 145-8501 (JP)
(74) Representative: Schmitt-Nilson, Gerhard

(56) References cited:
- EP-A- 0 659 599
- FR-A- 2 831 858
- US-A- 6 102 296

## Description

### 1. Technical Field

The present invention relates to an air-conditioning control unit can aspirate air in a vehicle interior by the use of an aspirator so as to detect a room temperature in an automatic vehicle air-conditioner and the like.

### 2. Related Art

In general, a circuit board having air-conditioning control operation switches in an automatic vehicle air-conditioner is mounted with an aspirator aspirating air in a vehicle interior. The aspirator has a motor and a fan in a chassis having an air inlet. Since the air in the vehicle interior is aspirated into the chassis by rotationally actuating the fan with the motor, a room temperature detecting sensor is disposed in a flow channel of the air to detect the room temperature. In order to discharge the air aspirated into the chassis to the outside, an air outlet is formed at a proper position in the chassis of the aspirator (for example, see Japanese Unexamined Patent Application Publication No. H5-505 (pages 5 to 7 and Fig. 1)).

Another example of such an air-conditioning control unit is known from FR 2 831 858, which is considered as the closest prior art document.

By interposing the circuit board between a front panel and a main case and unifying them, it is possible to obtain an air-conditioning control unit that can facilitate an assembly operation.

As described above, the air outlet is formed in the chassis of the aspirator, but it is preferable that the air outlet is formed in the vicinity of the fan in the chassis so as to smoothly discharge the air aspirated into the chassis to the outside of the chassis. However, when the air outlet is disposed in the vicinity of the fan of the chassis, the motor is close to the air outlet. Accordingly, when a worker' s finger or a jig comes in contact with the air outlet at the time of assembling the air-conditioning control unit, static electricity may spatter to the motor and enter the circuit board. In this case, circuit elements such as semiconductor devices may be subjected to electrostatic breakdown.

### SUMMARY

The invention is contrived to solve the above-mentioned problem. An object of the invention is to provide an air-conditioning control unit with high reliability in which an air outlet of an aspirator is not made to serve as a static electricity trespassing channel.

According to an aspect of the invention, there is provided an air-conditioning control unit comprising an aspirator in which a motor and a fan rotationally actuated with the motor are disposed in a synthetic-resin chassis having an air inlet and an air outlet, a room temperature detecting sensor disposed in a flow channel of air aspirated by the fan, a circuit board mounted with the aspirator, and a synthetic-resin main case holding the chassis with the air outlet communicating with an external space. Here, the main case includes an exhaust opening being exposed to the external space and communicating with the air outlet through a communication channel and a flow channel cover covering the communication channel.

In this way, by allowing the air outlet of the chassis of the aspirator to communicate with the external space through the communication channel covered with the flow channel cover of the main case, it is possible to smoothly discharge the air aspirated into the chassis to the external space from the exhaust opening of the main case through the communication channel and to make the air outlet greatly apart from the exhaust opening. Accordingly, a worker's finger or a jig may hardly come in contact with the air outlet of the chassis at the time of assembling the air-conditioning control unit. In addition, even when the worker's finger or the jig comes in contact with the exhaust opening, static electricity hardly spatters to the motor in the chassis through the communication channel.

In the above-mentioned configuration, it is preferable that an end of the chassis opposite to the circuit board is inserted into the main case and the flow channel cover extends in the insertion direction. According to this configuration, since the flow channel cover can be formed without a slide core at the time of molding the main case, a mold structure is simplified, thereby easily reducing the manufacturing cost.

In the above-mentioned configuration, it is preferable that an end of the chassis opposite to the circuit board constitutes a motor receiving section receiving the motor and a bottomed concave portion into which the motor receiving portion is inserted is formed in the main case. Accordingly, even when an opening exposing the motor is formed in the motor receiving section of the chassis, the opening can be covered with the bottomed concave portion, thereby hardly allowing static electricity to spatter to the motor from the outside. In this case, it is also preferable that the concave portion includes an elastic piece protruding inwardly and coming in elastic contact with the chassis and a cutout portion cut out along the outline of the elastic piece, and the chassis has a shape in which an opening is not formed at least at a position facing the cutout portion. Accordingly, since the chassis can be pressed against the circuit board with an urging force of the elastic piece so as to be pressed from both sides, it is possible to prevent the click of the aspirator. In addition, since the motor is not exposed from the cutout portion essential to the formation of the elastic piece, the static electricity hardly spatters to the motor from the outside.

In the air-conditioning control unit according to the invention, the air outlet of the chassis of the aspirator communicates with the external space through the communication channel covered with the flow channel cover of the main case. Accordingly, it is possible to smoothly discharge the air aspirated into the chassis to the external space from the exhaust opening of the main case through the communication channel and to make the air outlet greatly apart from the exhaust opening. As a result, a worker's finger or a jig may hardly come in contact with the air outlet of the chassis at the time of assembling the air-conditioning control unit. In addition, even when the worker's finger or the jig comes in contact with the exhaust opening, static electricity hardly spatters to the motor in the chassis through the communication channel. Therefore, it is possible to allow the air outlet of the aspirator not to serve as a static electricity trespassing channel, thereby obtaining an air-conditioning control unit with high reliability in which circuit elements are hardly subjected to electrostatic breakdown.

### BRIEF DESCRIPTION OF THE DRAWINGS

Fig. 1 is an exploded perspective view illustrating an air-conditioning control unit according to a first embodiment of the invention.
Fig. 2 is a cross-sectional view of the air-conditioning control unit.
Fig. 3 is a perspective view illustrating a backside shape of a main case of the air-conditioning control unit.
Fig. 4 is a perspective view illustrating an inner shape of the main case.
Fig. 5 is a front view of the main case.
Fig. 6 is a cross-sectional view taken along line A-A of Fig. 5.
Fig. 7 is a cross-sectional view taken along line B-B of Fig. 5.
Fig. 8 is a cross-sectional view illustrating a second embodiment of the invention.
Fig. 9 is a cross-sectional view illustrating a modified example of the second embodiment.

### DESCRIPTION OF EXEMPLARY EMBODIMENTS

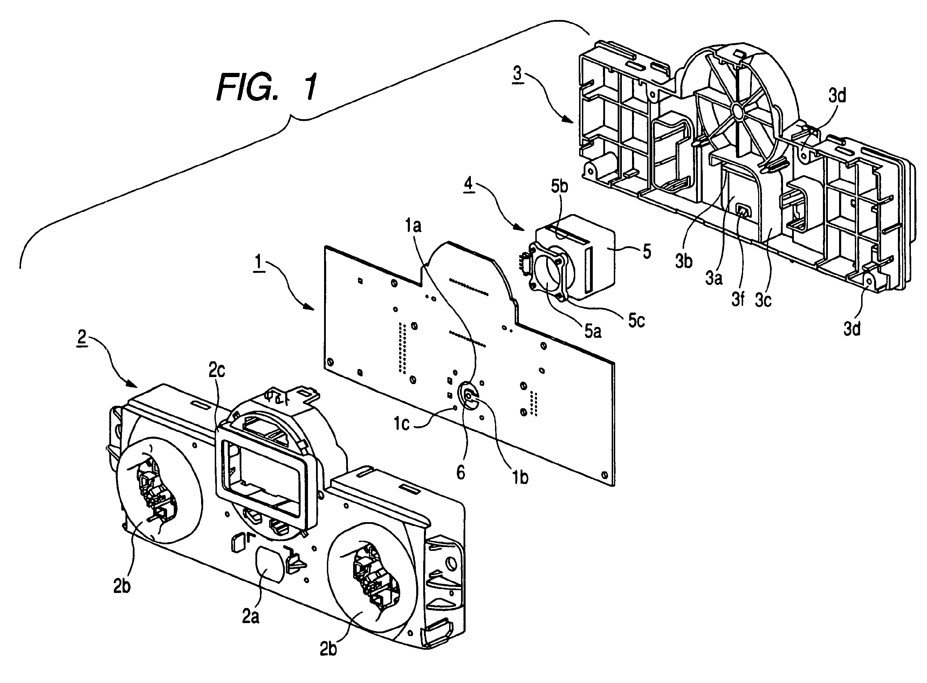

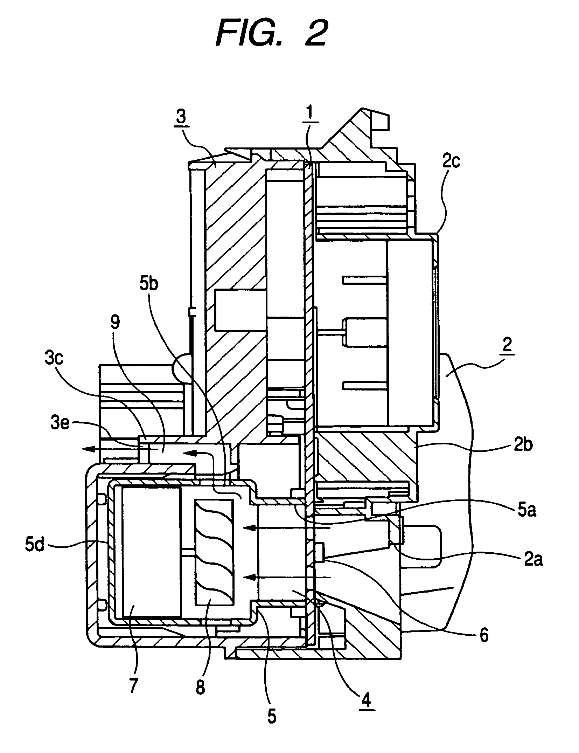

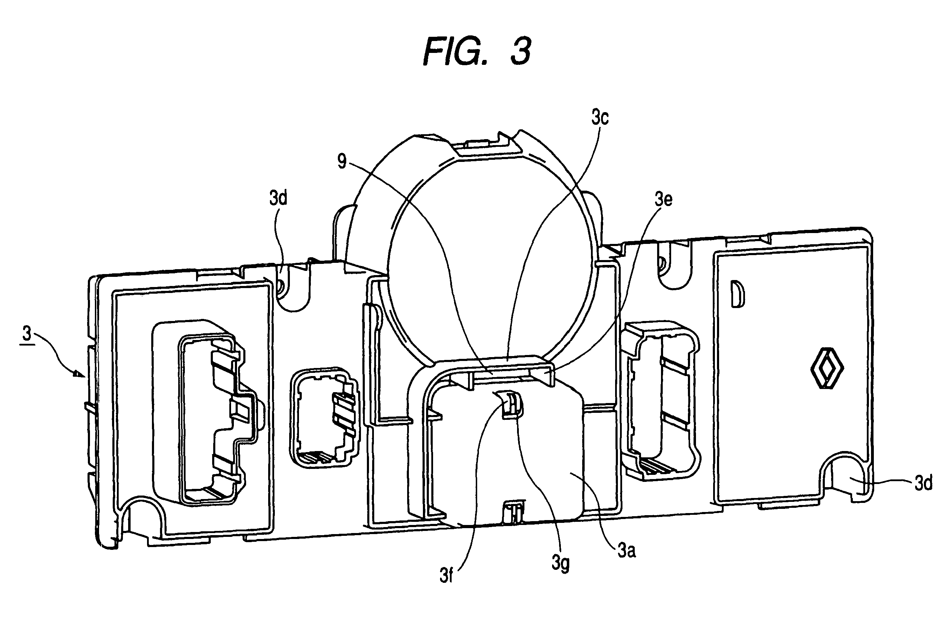

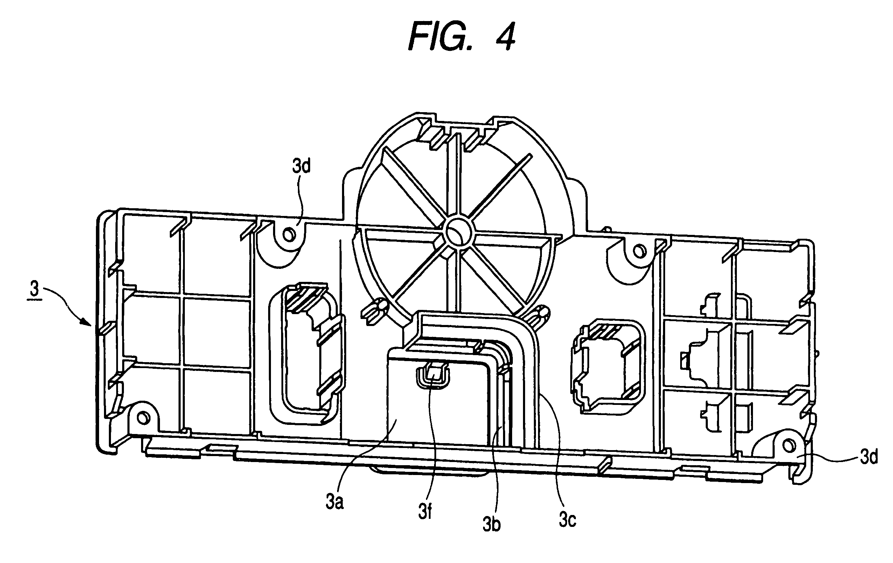

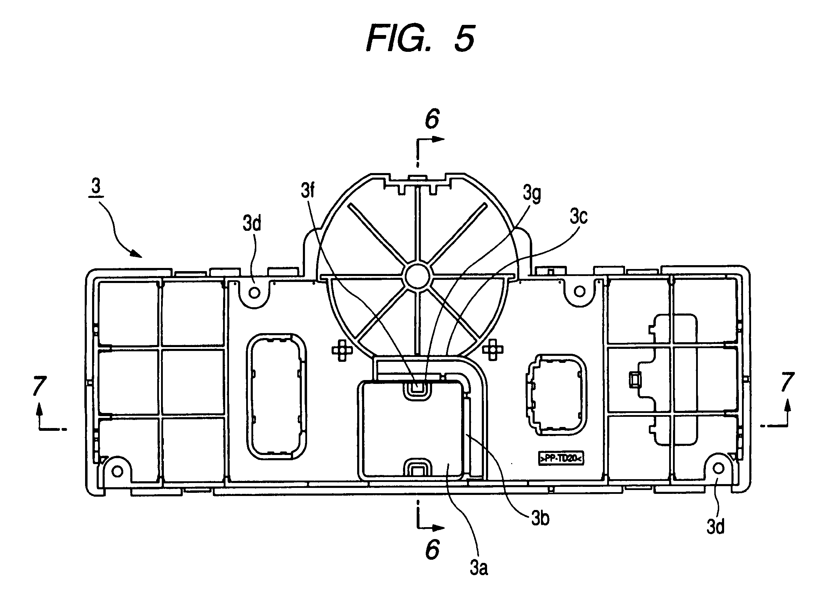

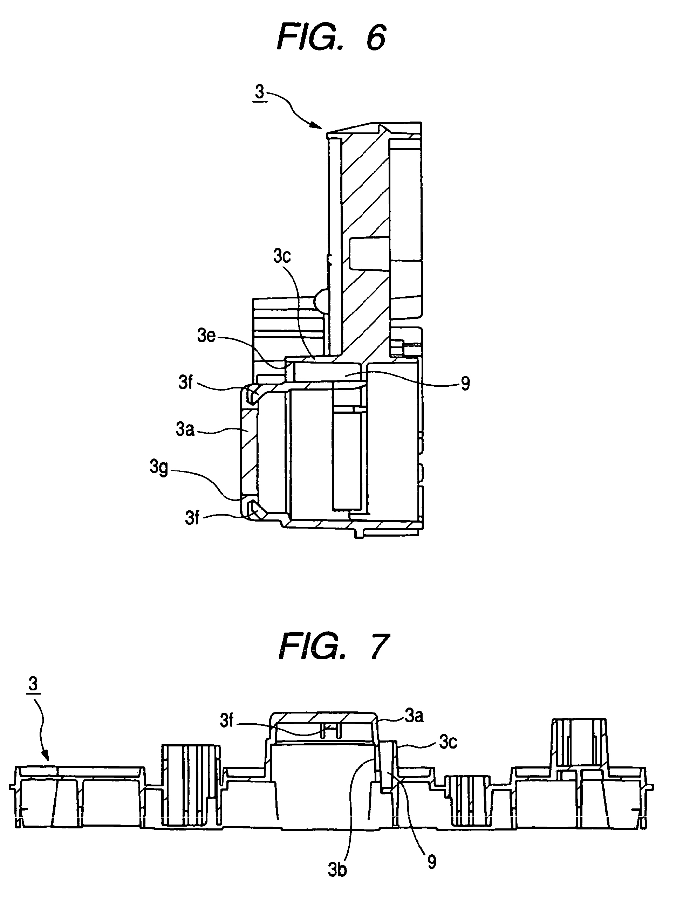

Exemplary embodiments of the invention will be described with the accompanying drawings. Fig. 1 is an exploded perspective view illustrating an air-conditioning control unit according to a first embodiment of the invention. Fig. 2 is a cross-sectional view of the air-conditioning control unit. Fig. 3 is a perspective view illustrating a backside shape of a main case of the air-conditioning control unit. Fig. 4 is a perspective view illustrating an inner shape of the main case. Fig. 5 is a front view of the main case. Fig. 6 is a cross-sectional view taken along line A-A of Fig. 5. Fig. 7 is a cross-sectional view taken along line B-B of Fig. 5.

The air-conditioning control unit shown in Figs. 1 and 2 is used for an automatic vehicle air-conditioner and is unified by interposing an aspirator 4 or a circuit board, which is mounted with operation switches not shown and a variety of electronic components, between a front panel 2 and a main case 3. An opening 1a and a tongue piece 1b facing an air inlet 5a of the aspirator 4 are formed in the circuit board 1 and the tongue piece 1b is mounted with a room temperature detecting sensor 6. Plural attachment holes 1c for attaching the aspirator 4 are formed around the opening 1a. The front panel 2 is made of a synthetic resin and includes an air aspirating opening 2a facing the opening 1a, an operation unit 2b provided with an operation knob and the like not shown, and a display unit 2c mounted with a display device not shown. The main case 3 is made of a synthetic resin and is provided with a bottomed concave portion 3a into which the rear end of the aspirator 4 is inserted, a flow channel cover 3c extending in an L shape along an L-shaped wall surface 3b of the concave portion 3a, and plural attachment portions 3d into which fixing screws not shown are inserted. An exhaust opening 3e is defined and formed between the rear end of the flow channel cover 3c and the concave portion 3a. The front panel 2 and the main case 3 are coupled to each other in a snap-fit manner to interpose the circuit board 1 therebetween and three of the circuit board 1, the front panel 2, and the main case 3 are reliably unified by fastening the fixing screws.

The aspirator 4 includes a synthetic-resin chassis 5 having an air inlet 5a and an air outlet 5b, and a motor 7 and a fan 8 disposed in the chassis 5. The air inlet 5a is formed in a round hole at the front end of the chassis 5 and the air outlet 5b is formed in a longitudinal hole at plural positions in the side wall of the chassis 5. The front end of the chassis 5 is provided with plural engaging protrusions 5c inserted into the attachment holes 1c of the circuit board 1 around the air inlet 5a. The motor 7 serves to rotationally drive the fan 8 and a quadrangular-box-shaped portion of the chassis 5 in the back of the air outlet 5b forms a motor receiving section 5d receiving the motor 7. At the time of attaching the main case 3 to the circuit board 1 mounted with the aspirator 4 and the like, the motor receiving section 5d of the chassis 5 is inserted into the concave portion 3a of the main case 3 so as to oppose two air outlets 5b to the flow channel cover 3c.

As shown in Figs. 2 and 3, a communication channel 9 communicating with the air outlets 5b of the aspirator 4 and being covered with the flow channel cover 3c are defined and formed between the concave portion 3a and the flow channel cover 3c of the main case 3. The rear end of the communication channel 9 serves as the exhaust opening 3e. A pair of elastic pieces 3f protruding inwardly and a pair of cutout portions 3g cut out along the outline of the elastic pieces 3f are formed in an inner wall of the concave portion 3a of the main case 3 (see Figs. 3 to 7) . The elastic pieces 3f serves to interpose an inner corner of the chassis 5 of the aspirator 4 inserted into the concave portion 3a from both sides while elastically urging the inner corner to the circuit board 1, thereby preventing the click of the aspirator 4. The cutout portions 3g are openings essentially formed to shape the elastic pieces 3f by the use of a mold, but the motor 7 is not exposed from the cutout portions 3g because no opening is formed at positions facing the cutout portions 3g in the motor receiving section 5d of the chassis 5.

In the air-conditioning control unit having the above-mentioned configuration, when the fan 8 is rotationally driven by the motor 7 of the aspirator 4, the air in the vehicle interior is aspirated into the chassis 5 from the air inlet 5a through the air aspirating opening 2a of the front panel 2 and the opening 1a of the circuit board 1. As a result, the room temperature can be detected by the use of the room temperature detecting sensor 6 disposed in the flow channel of the air. The air aspirated into the chassis 5 is discharged to an external space from the exhaust opening 3e from the air outlet 5b through the communication channel 9.

As described above, in the air-conditioning control unit according to this embodiment, since the air outlet 5b of the chassis 5 of the aspirator 4 communicates with the external space through the communication channel 9 covered with the flow channel cover 3c of the main case 3, the air aspirated into the chassis 5 can be smoothly discharged to the external space from the exhaust opening 3e of the main case 3. Since the air outlet 5b and the exhaust opening 3e are greatly apart from each other due to the communication channel 9, a worker' s finger or a jig hardly comes in contact with the air outlet 5b of the chassis 5 at the time of assembling the air-conditioning control unit. Even when the worker's finger or the jig comes in contact with the exhaust opening 3e of the main case 3, static electricity hardly spatters to the motor 7 in the chassis 5 through the communication channel 9. Accordingly, the air outlet 5b of the aspirator 4 cannot be made to serve as a static electricity trespassing channel, thereby obtaining an air-conditioning control unit with high reliability in which circuit elements are hardly subjected to electrostatic breakdown.

In this embodiment, the motor receiving section 5d of the chassis 5 is inserted into the concave portion 3a of the main case 3. However, since the flow channel cover 3c is disposed to extend along the insertion direction (the lateral direction in Fig. 2), it is possible to form the flow channel cover 3c without using a slide core at the time of shaping the main case 3. Accordingly, the mold structure of the main case 3 is simplified, thereby easily reducing the manufacturing cost.

In this embodiment, since the elastic pieces 3f coming in elastic contact with the inner corners of the motor receiving section 5d of the chassis 5 are disposed in the inner wall of the concave portion 3a of the main case 3, the chassis 5 is elastically pressed against the circuit board 1 and is held in the main case 3 in a state where the chassis is interposed from both sides, thereby preventing the click of the aspirator 4. As described above, since the motor 7 is not exposed from the cutout portions 3g formed in the elastic pieces 3f, the static electricity hardly spatters to the motor 7 of the chassis 5 through the cutout portions 3g from the outside.

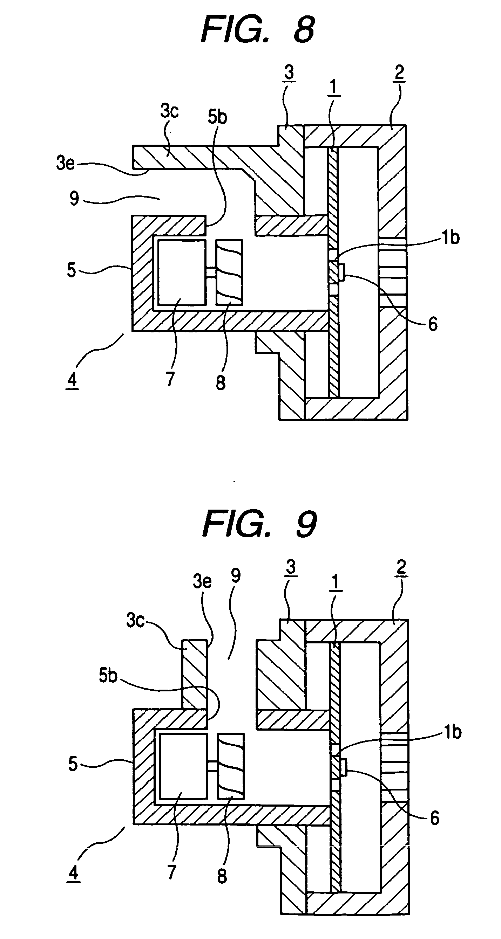

It has been described in the first embodiment that the motor receiving section 5d of the chassis 5 is inserted into the concave portion 3a of the main case 3. However, as in a second embodiment shown in Fig. 8, even when the chassis 5 is inserted through the main case 3, it is possible to make the air outlet 5b not serve as the static electricity trespassing channel without hindering the operation of discharging the air in the aspirator 4, by allowing the flow channel cover 3c of the main case 3 facing the air outlet 5b of the chassis 5 to extend backwardly and covering the communication channel 9 serving as the flow channel of the air discharged to the external space from the air outlet 5b with the flow channel cover 3c.

As in a modified example shown in Fig. 9, even when the flow channel cover 3c is disposed to protrude perpendicularly to the insertion direction of the chassis 5 into the main case 3, it is possible to make the air outlet 5b not serve as the static electricity trespassing channel without hindering the operation of discharging the air in the aspirator 4, similarly to the second embodiment shown in Fig. 8.

## Claims

1. An air-conditioning control unit comprising an aspirator (4) in which a motor (7) and a fan (8) rotationally actuated with the motor (7) are disposed in a synthetic-resin chassis (5) having an air inlet (5a) and an air outlet (5b), a room temperature detecting sensor (6) disposed in a flow channel of air aspirated by the fan (8), a circuit board (1) mounted with the aspirator (4), and a synthetic-resin main case (3) holding the chassis (5) with the air outlet communicating with an external space, **characterized in that** the main case (3) includes an exhaust opening (3e) being exposed to the external space and communicating with the air outlet (5b) through a communication channel (9) and a flow channel cover (3c) covering the communication channel.

2. The air-conditioning control unit according to claim 1, wherein an end of the chassis (5) opposite to the circuit board (1) is inserted into the main case (3) and the flow channel cover (3c) extends in the insertion direction.

3. The air-conditioning control unit according to claim 1 or 2, wherein an end of the chassis (5) opposite to the circuit board (1) constitutes a motor receiving section (5d) receiving the motor (7) and a bottomed concave portion (3a) into which the motor receiving portion (5d) is inserted is formed in the main case (3).

4. The air-conditioning control unit according to claim 3, wherein the concave portion (3a) includes an elastic piece (3f) protruding inwardly and coming in elastic contact with the chassis (5) and a cutout portion (3g) cut out along the outline of the elastic piece (3f), and the chassis (5) has a shape in which an opening is not formed at least at a position facing the cutout portion (3g).

## Patentansprüche

1. Klimaanlagen-Steuereinheit, aufweisend eine Ansaugeinrichtung (4), in der ein Motor (7) und ein mit dem Motor (7) rotationsmäßig betätigtes Gebläse (8) in einem Kunstharzgehäuseelement (5) mit einem Lufteinlass (5a) und einem Luftauslass (5b) angeordnet sind, einen Raumtemperatur-Detektionssensor (6), der in einem Strömungskanal von durch das Gebläse (8) angesaugter Luft angeordnet ist, eine an der Ansaugeinrichtung (4) angebrachte Schaltungsplatte (1) und ein Kunstharz-Hauptgehäuse (3), das das Gehäuseelement (5) hält, wobei der Luftauslass mit einem externen Raum in Verbindung steht,
**dadurch gekennzeichnet, dass** das Hauptgehäuse (3) eine Austrittsöffnung (3e) aufweist, die zu dem externen Raum freiliegt und durch einen Verbindungskanal (9) und eine den Verbindungskanal bedeckende Strömungskanalabdeckung (3c) mit dem Luftauslass (5b) in Verbindung steht.

2. Klimaanlagen-Steuereinheit nach Anspruch 1,
wobei ein der Schaltungsplatte (1) entgegengesetztes Ende des Gehäuseelements (5) in das Hauptgehäuse (3) eingesetzt ist und sich die Strömungskanalabdeckung (3c) in der Einsetzrichtung erstreckt.

3. Klimaanlagen-Steuersystem nach Anspruch 1 oder 2,
wobei ein der Schaltungsplatte (1) entgegengesetztes Ende des Gehäuseelements (5) einen Motoraufnahmebereich (5d) zum Aufnehmen des Motors (7) bildet und ein mit Boden versehener konkaver Bereich (3a), in den der Motoraufnahmebereich (5d) eingesetzt ist, in dem Hauptgehäuse (3) ausgebildet ist.

4. Klimaanlagen-Steuereinheit nach Anspruch 3,
wobei der konkave Bereich (3a) ein elastisches Stück (3f), das nach innen ragt und mit dem Gehäuseelement (5) in elastischen Kontakt tritt, sowie einen Aussparungsbereich (3g) aufweist, der entlang des Umrisses des elastischen Stücks (3f) ausgespart ist, und wobei das Gehäuseelement (5) eine Formgebung aufweist, bei der eine Öffnung zumindest nicht an einer dem Aussparungsbereich (3g) zugewandt gegenüberliegenden Stelle gebildet ist.

## Revendications

1. Unité de commande de climatisation comprenant un aspirateur (4) dans lequel un moteur (7) et un ventilateur (8) actionné en rotation par le moteur (7) sont disposés dans un châssis en résine synthétique (5) comportant une entrée d'air (5a) et une sortie d'air (5b), un capteur de détection de température ambiante (6) placé dans un chenal d'écoulement d'air aspiré par le ventilateur (8), une carte de circuit imprimé (1) sur laquelle est monté l'aspirateur (4), et un boîtier principal en résine synthétique (3) maintenant le châssis (5) avec la sortie d'air en communication avec un espace extérieur, **caractérisée en ce que** le boîtier principal (3) comprend une ouverture de refoulement (3e) exposée à l'espace extérieur et communiquant avec la sortie d'air (5b) par un canal de communication (9) et un couvercle de chenal d'écoulement (3c) couvrant le canal de communication.

2. Unité de commande de climatisation selon la revendication 1, dans laquelle une extrémité du châssis (5) opposée à la carte de circuit imprimé (1) est insérée dans le boîtier principal (3) et le couvercle de chenal d'écoulement (3c) s'étend dans la direction d'insertion.

3. Unité de commande de climatisation selon la revendication 1 ou 2, dans laquelle une extrémité du châssis (5) opposée à la carte de circuit imprimé (1) constitue une section de réception de moteur (5d) recevant le moteur (7) et une partie de fond concave (3a) dans laquelle est insérée la partie de réception de moteur (5d) est formée dans le boîtier principal (3).

4. Unité de commande de climatisation selon la revendication 3, dans laquelle la partie concave (3a) comprend une pièce élastique (3f) faisant saillie vers l'intérieur et venant en contact élastique avec le châssis (5) et une partie découpée (3g) découpée le long du contour de la pièce élastique (3f), et le châssis (5) a une forme dans laquelle une ouverture n'est pas formée au moins en une position située en vis-à-vis de la partie découpée (3g).
